Europäisches Patentamt

European Patent Office

Office européen des brevets

(19)

(11) Numéro de publication : **0 328 994 B1**

(12) **FASCICULE DE BREVET EUROPEEN**

(45) Date de publication du fascicule du brevet :
24.07.91 Bulletin 91/30

(51) Int. Cl.⁵ : **B29D 30/34**

(21) Numéro de dépôt : **89102078.6**

(22) Date de dépôt : **07.02.89**

(54) **Dispositif d'arrêt pour la fabrication d'un renforcement pour pneumatique.**

(30) Priorité : **19.02.88 FR 8802102**

(43) Date de publication de la demande :
**23.08.89 Bulletin 89/34**

(45) Mention de la délivrance du brevet :
**24.07.91 Bulletin 91/30**

(84) Etats contractants désignés :
**AT BE CH DE ES FR GB GR IT LI LU NL SE**

(56) Documents cités :
**EP-A- 0 009 018
EP-A- 0 243 851
DE-B- 1 291 112**

(73) Titulaire : **COMPAGNIE GENERALE DES
ETABLISSEMENTS MICHELIN-MICHELIN &
CIE
4, rue du Terrail
F-63000 Clermont-Ferrand (FR)**

(72) Inventeur : **Mayet, Jean-Claude
48, Rue Clovis Hughes Pavillon No. 10
F-63000 Clermont-Ferrand (FR)**

(74) Mandataire : **Bauvir, Jacques et al
Michelin & Cie Service K. Brevets
F-63040 Clermont-Ferrand Cédex (FR)**

EP 0 328 994 B1

## Description

La présente invention se rapporte à la fabrication des pneumatiques. Plus particulièrement, elle concerne un stade de la fabrication d'un renforcement à partir d'un seul fil, correspondant au préambule de la revendication 1. Le principe est décrit dans EP-A-243 851.

Selon l'enseignement de cette demande de brevet, le renforcement pour pneumatique est réalisé par accrochage d'un fil continu à deux cercles de moyens de retenue du fil de sorte que l'on définisse ainsi un cylindre par une pluralité d'allers et de retours d'un moyen de retenue à un autre. Ensuite, par un mouvement approprié des moyens de retenue, on rabat les fils sur et autour du noyau pour que le renforcement prenne, ou commence à prendre sa place définitive dans le pneumatique. Mais avant de rabattre, il faut avoir isolé le fil des moyens de dévidage. C'est le rôle d'une tête, illustrée aux figures 12 et 12a de la demande précitée, ladite tête assurant le collage du dernier tronçon de fil posé, au premier tronçon de fil posé.

La présente invention vise à supprimer l'emploi de colle lorsque l'on arrête le dévidage du fil. On utilise les propriétés d'auto-adhésion du fil utilisé sur la couche de caoutchouc cru dont le noyau a été préalablement revêtu.

Le dispositif selon l'invention comporte :

1) deux mâchoires pouvant être insérées de part et d'autre des brins de fil à couper, puis pinçant le fil par un rapprochement de l'une vers l'autre dans un mouvement parallèle à l'axe dudit noyau,
2) un système de coupe du fil du côté des mâchoires opposé au noyau,
3) des moyens pour rapprocher lesdites mâchoires contre ledit noyau tout en les maintenant serrées.

D'autres développements avantageux du dispositif selon la présente invention font l'object des revendications dépendantes.

Les figures suivantes permettent de bien comprendre l'invention et d'en saisir tous les avantages.

La figure 1 illustre la phase finale de l'accrochage du fil.
La figure 2 est une vue en plan du dispositif.
La figure 3 est une vue en élévation du dispositif.

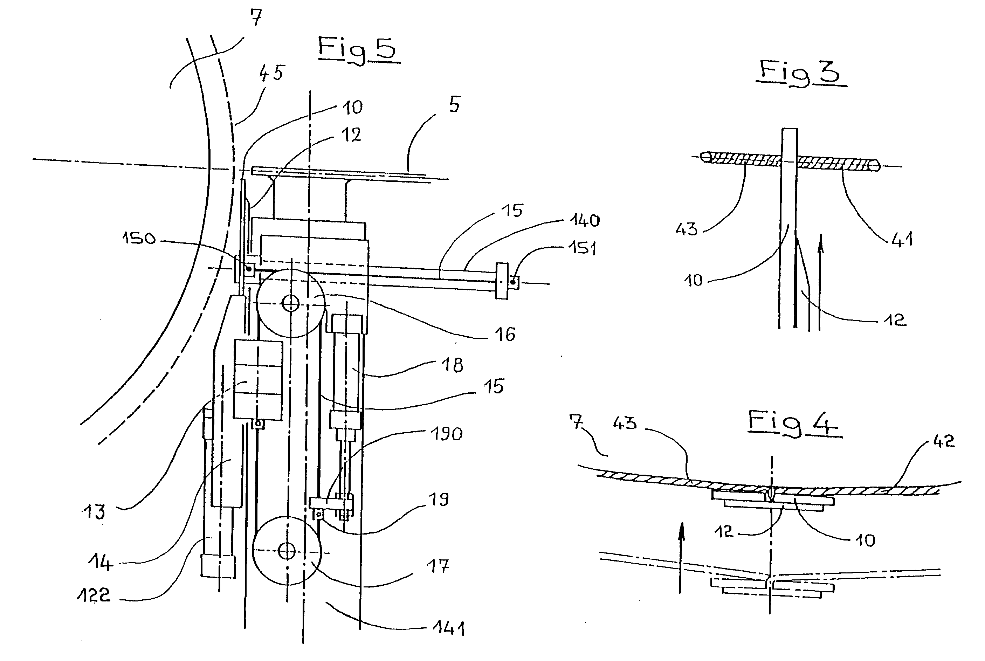

La figure 4 montre l'application du fil sur le noyau.
Les figures 5 et 6 montrent la commande du mouvement d'approche du dispositif.
La figure 7 fait apparaître la commande du mouvement des mâchoires.

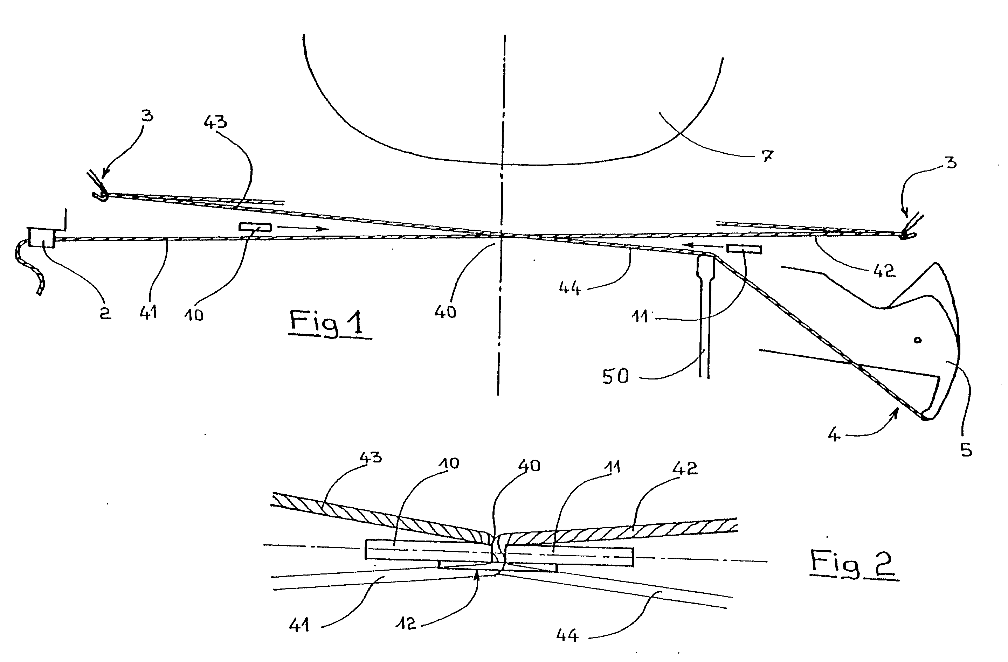

Bien sûr, le terme fil désigne ici en général tous les éléments filiformes utilisables pour construire ce que l'on désigne habituellement par nappe de carcasse ou nappe de sommet. On voit à la figure 1 le noyau 7 définissant la forme de la surface intérieure du pneumatique à fabriquer. Ce noyau est revêtu d'une couche de caoutchouc non vulcanisé. Au départ, le fil 4 a été introduit dans la pince 2 puis a été accroché au premier moyen de retenue 3 rencontré par le bras rotatif 5, dont on n'a représenté ici que l'extrémité pour ne pas surcharger inutilement le dessin. Les segments 41 et 42 constituent le premier tronçon de fil 4 posé, selon la définition du terme tronçon donnée dans la demande de brevet précitée dans laquelle on trouvera plus de détails sur le procédé et l'appareil pour lesquels le dispositif de la présente invention est utilisé. A la fin de cette phase de la fabrication, le bras rotatif 5 est arrêté du côté opposé à la pince 2 et le fil 4 se présente en deux tronçons 41 + 42 et 43 + 44 rectilignes tendus et faiblement inclinés l'un par rapport à l'autre, se croisant en un point 40. De préférence, on veille à ce que ce point 40 soit situé sensiblement au milieu du futur pneumatique, dans le sens transversal. Pour cela, on peut conférer une avance adéquate au bras 5 ou bien on peut actionner une barre 50 pour déplacer le fil 4.

L'organe essentiel du dispositif est une paire de mâchoires 10 et 11. On insère cesdites mâchoires 10 et 11 de part et d'autre de ce point 40 de croisement, d'une part entre le segment 41 du fil 4 attaché à la pince 2 et le segment 43 accroché sur le dernier moyen de retenue 3 rencontré par le bras 5, et d'autre part entre le segment 44 rejoignant l'orifice de sortie du bras 5 et le segment 42 accroché au premier moyen de retenue 3 rencontré par le bras au départ de cette phase de fabrication. Le dispositif est conçu et implanté sur l'appareil de fabrication de sorte que le mouvement de fermeture des mâchoires est parallèle à l'axe du noyau 7, c'est-à-dire approximativement parallèle à la bissectrice de l'angle formé par les segments 41 et 43 de fil 4. Le mouvement de fermeture est schématisé sur la figure 1 par des flèches au voisinage de chacune des mâchoires.

De la sorte, après fermeture des mâchoires 10 et 11 (figures 2 et 3), on trouve d'un côté de celles-ci (côté noyau 7), les segments 42 et 43 du fil 4 accrochés par ailleurs aux moyens de retenue 3, c'est-à-dire ceux devant faire partie du renforcement du pneumatique. De l'autre côté des mâchoires, on trouve les segments 41 et 44 rejoignant respectivement la pince 2 et le bras 5, c'est-à-dire ceux que l'on ne souhaite pas incorporer au renforcement.

Du côté opposé au noyau 7, on implante un système de coupe, constitué ici très simplement par une lame tranchante 12 se déplaçant le long des mâchoires 10 et 11.

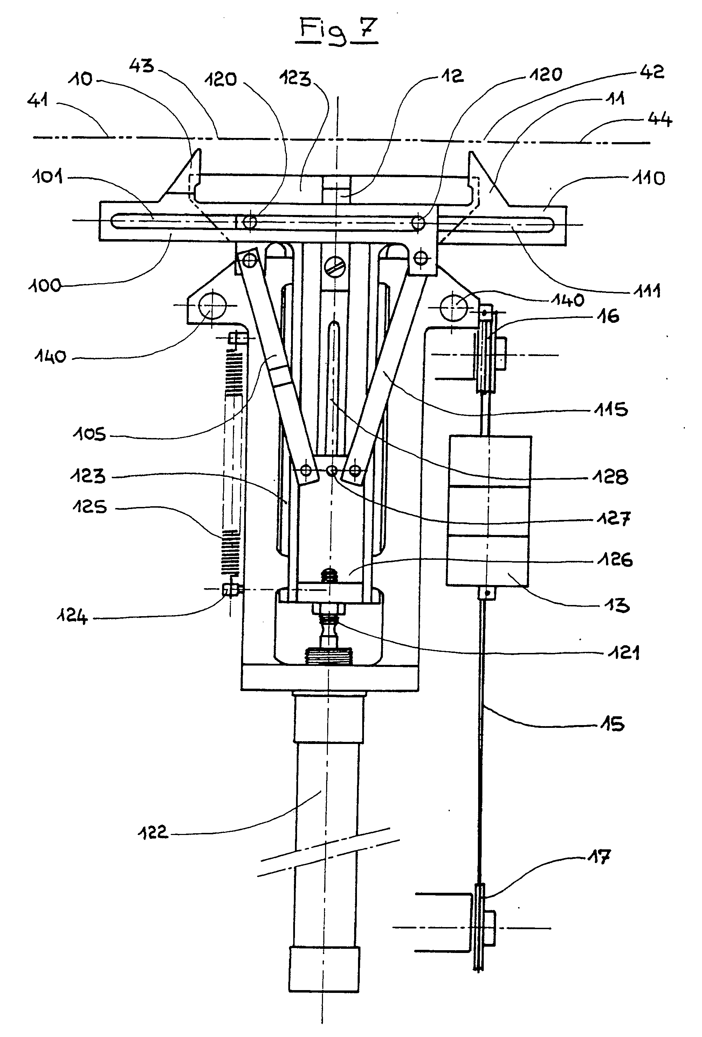

La figure 7 donne en détails un exemple de réalisation de la commande du mouvement des mâchoires 10 et 11 et de la lame 12. Une première coulisse 123 commandée par un vérin 122 et un dispositif à lumière, ergot 124 et ressort 125 de rappel permet l'introduction des mâchoires 10 et 11 entre les segments 41, 43 et 42, 44 de fil 4 (voir figure 1). Les bases 100, 110 des mâchoires 10 et 11 comportent des lumières 101 et 111 qui permettent de les maintenir sur des ergots 120 eux mêmes fixés sur la coulisse 123, tout en permettant un mouvement relatif de rapprochement et d'éloignement des mâchoires 10 et 11. Ledit mouvement relatif est commandé par un système à genouillère, constitué par deux biellettes 105 et 115 articulées chacune sur l'une des bases 100, 110 d'une part, et sur un coulisseau 126 solidaire de la tête 121 du vérin 122. L'extension du vérin 122 provoque l'ouverture du V constitué par les biellettes 105 et 115, et ainsi le rapprochement des mâchoires 10 et 11.

En outre, une extension supplémentaire du vérin 122 actionne la lame 12 par le fait qu'un ergot 127 solidaire du coulisseau 126 vient buter contre l'extrémité de la lumière 128 aménagée dans la lame 12. On règle la disposition des biellettes 105 et 115 pour que la commande de la lame 12 ne provoque quasi aucun mouvement des mâchoires 10 et 11.

Après avoir sectionné les fils, on approche les mâchoires 10 et 11 du noyau 7, sans les déserrer de manière à maintenir les segments 42 et 43 du fil 4 jusqu'à ce que ceux-ci soient appliqués sur le caoutchouc non vulcanisé, capable de les retenir par adhésion. A cette fin, les mâchoires accompagnent le mouvement imprimé à l'ensemble du renforcement par les moyens de retenue 3. On relâche les mâchoires lorsqu'une longueur suffisante des segments 42 et 43 de fil 4 (départ et fin de la pose du renforcement) est bien appliquée sur le noyau 7.

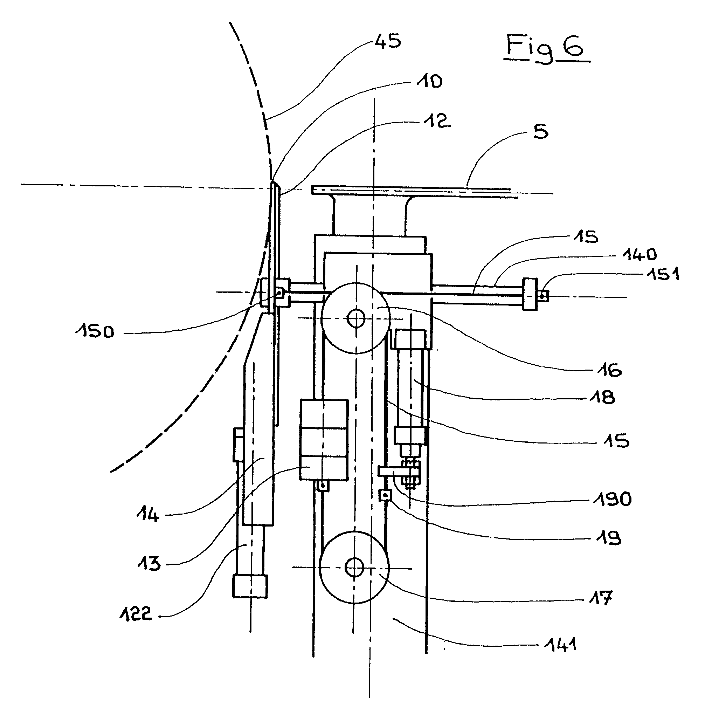

Les moyens mis en oeuvre pour assurer cette approche comportent un contre-poids 13, bien visible à la figure 5, qui permet, dès que les mâchoires 10 et 11 sont en contact avec le cylindre 45 de tronçons de fils 4, d'accompagner la diminution de diamètre de celui-ci au début de la phase de rabattement sur et autour du noyau 7. Les mâchoires 10 et 11 sont portées par une structure 14 qui coulisse sur une glissière de guidage 140. Les mouvements d'approche et de recul de la structure 14 par rapport au noyau 7 sont commandés par l'intermédiaire d'un câble 15 enroulé autour de deux poulies de renvoi 16 et 17 dont l'axe est solidaire du bâti 141 de la machine. Le câble 15 est accroché aux extrémités de la glissière en 150 et 151. Le mouvement du câble 15 par rapport au piston du vérin 18 est libre dans un sens mais bloqué par une butée 19 dans l'autre sens. Cette butée 19 est fixée sur le câble 15, et le piston du vérin 18 appuie sur cette butée 19 par l'intermédiaire du taquet 190 coulissant par ailleurs librement sur le câble 15. Pour provoquer l'approche, on déploie le piston du vérin 18. L'effort nécessaire à l'avancement des mâchoires 10 et 11 est dû à la gravité : le contre-poids 13 est calculé de manière à ne provoquer quasi aucune déformation du cylindre 45 de tronçons de fil 4, tout en assurant, en fin d'approche, un appui suffisant des mâchoires 10 et 11 sur le noyau. La figure 5 montre la structure 14 en position éloignée du noyau 7. C'est la position dans laquelle les mâchoires 10 et 11 viennent pincer le fil 4. La figure 6 montre la même structure 14 en position approchée du cylindre 45 de tronçons de fil 4. L'intérêt du système à contre-poids 13 est qu'il permet bien de suivre le mouvement ultérieur des tronçons de fil 4 (qui est explicité dans la demande de brevet EP 243 851 auquel il convient de se reporter pour plus de détails), tout en maintenant un effort de contact dans le sens radial léger et constant.

Après ouverture des mâchoires 10 et 11, l'éloignement de la structure 14 est provoqué par la descente du piston du vérin 18.

## Revendications

1. Dispositif d'arrêt d'un renforcement pour pneumatique réalisé par accrochage d'un fil (4) continu à deux cercles de moyens de retenue (3) du fil (4) de sorte que l'on définisse un cylindre par une pluralité d'allers et de retours d'un moyen de retenue à un autre, puis par rabattement des fils (4) sur et autour d'un noyau (7), caractérisé en ce qu'il comporte

1) deux mâchoires (10, 11) pouvant être insérées de part et d'autre des brins (41 + 42, 43 + 44) de fil (4) à couper, puis pinçant le fil (4) par un mouvement parallèle à l'axe dudit noyau (7),

2) un système de coupe (12) du fil (4) du côté des mâchoires opposé au noyau (7),

3) des moyens pour rapprocher lesdites mâchoires contre ledit noyau tout en les maintenant serrées.

2. Dispositif selon la revendication 1, caractérisé en ce que les moyens pour rapprocher lesdites mâchoires comportent un contre-poids (13) qui fournit, par gravité, l'effort nécessaire à l'avancement des mâchoires (10 et 11) vers le noyau (7).

## Patentansprüche

1. Haltevorrichtung für eine Verstärkung von Luftreifenhüllen, die durch Verankerung eines durchgehenden Fadens (4) an zwei Kreisen von Haltemitteln (3) für den Faden (4) hergestellt wird, wobei durch eine Vielzahl von Hin- und Herführungen des Fadens von einem Haltemittel zum anderen ein Zylinder definiert wird und anschließend die Fäden (4) auf und um einen Kern (7) geschlagen werden, dadurch gekennzeichnet, daß sie umfaßt :

1) zwei Klemmbacken (10, 11), die zu beiden Seiten der Trums (41 + 42, 43 + 44) des zu schneidenden Fadens (4) eingebracht werden können und sodann den Faden (4) durch eine Bewegung parallel zur Achse des Kernes (7) ergreifen,

2) ein Schneidsystem (12) für den Faden (4) auf der Seite der Klemmbacken, die dem Kern (7) abgewandt ist,

3) Mittel, um die Klemmbacken an den Kern heranzubringen, wobei sie in der Klemmlage bleiben.

2. Vorrichtung nach Anspruch 1, dadurch gekennzeichnet, daß die Mittel zur Annäherung der Klemmbacken ein Gegengewicht (13) umfassen, das durch Gravitation die notwendige Kraft zur Verschiebung der Klemmbacken (10 und 11) gegen den Kern (7) liefert.

## Claims

1. A device for implementing on a tyre core (7) a tyre reinforcement produced by hooking a continuous cord (4) to two circles of retaining means (3) for the cord (4) so as to define a cylinder by a plurality of forward and return movements from one retaining means to the other, then folding the cords (4) on and around a core (7), characterized by the fact that it comprises :

1) two jaws (10, 11) disposed on opposite sides of the strands (41 + 42, 43 + 44) of cord (4) to be cut which clamp the cord (4) by a movement parallel to the axis of said core (7) ;

2) a cutting system (12) for the cord (4) on the side of the jaws opposite the core (7) ; and

3) means for bringing said jaws against said core while holding them closed.

2. A device according to claim 1, characterized by the fact that the means for the approach movement of the said jaws comprise a counterweight (13) which, by gravity, supplies the force necessary for the advance of the jaws (10 and 11) towards the core (7).

EP 0 328 994 B1

Fig 1

Fig 2

Fig 3

Fig 4

Fig 5

Fig 6

# Fig 7